# EUROPEAN PATENT SPECIFICATION

(11) **EP 4 579 631 B1**
(45) Date of publication and mention of the grant of the patent: **02.12.2026**
(21) Application number: 24219120.3
(22) Date of filing: 11.12.2024
(51) Int. Cl.: G08G 5/00, G08G 5/22, G08G 5/23, G08G 5/26, G08G 5/52, G08G 5/53, G08G 5/54, G08G 5/56, G08G 5/57, G08G 5/72, G05D 1/224

(54) **INFORMATION PROCESSING DEVICE, INFORMATION DISPLAY METHOD, AND INFORMATION PROCESSING PROGRAM**
INFORMATIONSVERARBEITUNGSVORRICHTUNG, INFORMATIONSANZEIGEVERFAHREN UND INFORMATIONSVERARBEITUNGSPROGRAMM
DISPOSITIF DE TRAITEMENT D'INFORMATIONS, PROCÉDÉ D'AFFICHAGE D'INFORMATIONS ET PROGRAMME DE TRAITEMENT D'INFORMATIONS

(30) Priority: 28.12.2023 JP 2023223104
(43) Date of publication of application: 02.07.2025
(73) Proprietor: Rakuten Group, Inc., Setagaya-ku Tokyo 158-0094 (JP)
(72) Inventor: MATSUMOTO, Asaki, Tokyo, 158-0094 (JP); INUMA, Takayoshi, Tokyo, 158-0094 (JP)
(74) Representative: EIP

(56) References cited:
- JP-A- 2020 536 780
- JP-A- 2023 057 120
- JP-A- 2023 073 018
- US-A1- 2021 276 735

## Description

### BACKGROUND

### Technical Field

One or more embodiments of the present invention relate to a technical field of a remote monitoring system capable of remotely monitoring an unmanned aerial vehicle.

### Related Art

Conventionally, it is expected that unmanned aerial vehicles such as drones will be used for a delivery service. In order to realize a multiple vehicle operation in the delivery service, it is necessary for one operator to monitor multiple unmanned aerial vehicles from the viewpoint of cost reduction, etc. For example, Patent Literature 1 discloses a technology for accomplishing optimization of a display of information including a plurality of images transmitted from a plurality of flying objects. According to the technology described in Patent Literature 1, the user interface screen of the user terminal has the plurality of the display areas 61 and 62A-62E for displaying image/movie data transmitted from each flying object. And the image/movie data received from the flying object selected by the user among the plurality of flying objects is displayed on the display area 61 with a larger display area compared to the display areas 62A-62E. Thus, the user can more easily confirm the image/movie data received from the selected flying object. Patent Literature 2 relates to an information display method for controlling an aircraft. Patent Literature 3 relates to a drone landing system and drone landing station. Patent Literature 4 relates to a device for controlling a drone.

### Citation List

### Patent Literature

Patent Literature 1: JP 2019-195173 A
Patent Literature 2: JP 2023 057120 A
Patent Literature 3: JP 2020 536780 A
Patent Literature 4: JP 2023 073018 A

### Summary of Invention

### Technical Issue

By the way, the technology described in Patent Literature 1 only displays information transmitted from each flying object. However, for an operator who monitors multiple unmanned aerial vehicles, it is important not only to obtain information from unmanned aerial vehicles, but also information from a base where unmanned aerial vehicles can take off and land.

Therefore, one or more embodiments of the present invention are to providing an information processing device, an information display method, and an information processing program, which are capable of providing significant information useful for more monitoring to an operator who monitors a plurality of unmanned aerial vehicles.

### Solution to Issue

In response to the above issue, there is provided an information processing device, an information display method, and an information processing program according to the appended claims.

### Advantageous Effect of the Invention

According to one or more embodiments of the present invention, it is possible to provide significant information useful for more monitoring to an operator who monitors a plurality of unmanned aerial vehicles.

### Brief Description of the Drawings

FIG. 1 is a diagram illustrating a schematic configuration example of a remote monitoring system S.
FIG. 2 is a diagram illustrating a schematic configuration example of a drone Dn.
FIG. 3 is a diagram illustrating a schematic configuration example of an operator terminal Tm.
FIG. 4 is a diagram illustrating a display example of a drone monitoring screen (example 1) displayed on an operator terminal T1 of an operator OP1.
FIG. 5 is a diagram illustrating a display example of a drone monitoring screen (example 2) displayed on the operator terminal T1 of the operator OP1.
FIG. 6 is a diagram illustrating a schematic configuration example of a management server MS.
FIG. 7 is a diagram illustrating an example of functional blocks in a control unit 33.
FIG. 8 is a sequence diagram illustrating an example of monitoring information display processing executed by the operator terminal T1 and the management server MS.
FIG. 9 is a sequence diagram illustrating an example of highlighting update processing executed by the operator terminal T1 and the management server MS.

### DETAILED DESCRIPTION

Hereinbelow, one or more embodiments of the present invention will be described with reference to the drawings. Incidentally, the following embodiment is an embodiment in a case where the present invention is applied to a remote monitoring system capable of remotely monitoring drones.

### [1. Configuration and Operation outline of Remote Monitoring System S]

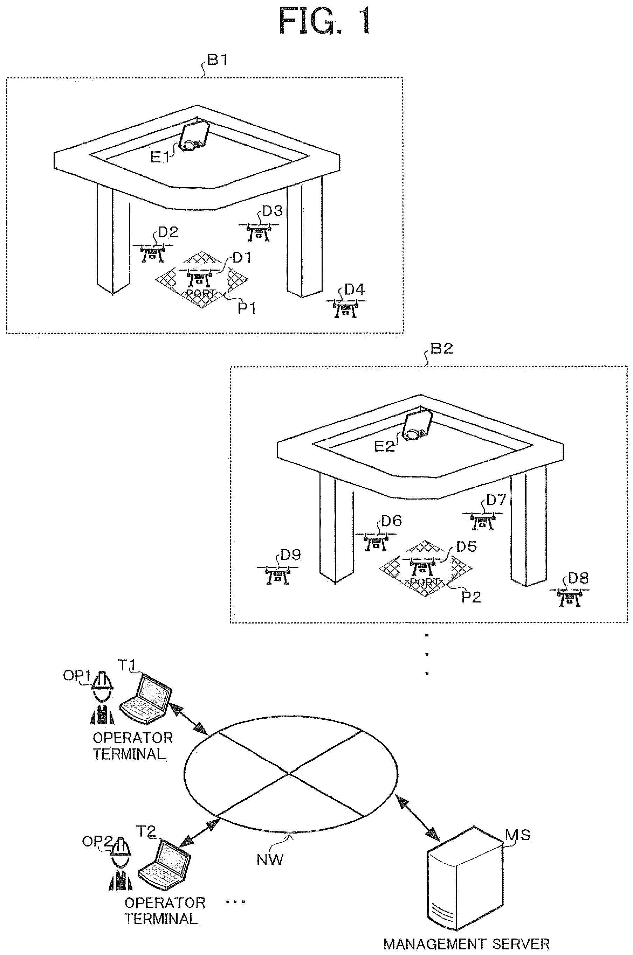

First, a description will be given as to a configuration and an operation outline of a remote monitoring system S according to the present embodiment with reference to FIG. 1. FIG. 1 is a diagram illustrating a schematic configuration example of the remote monitoring system S. As illustrated in FIG. 1, the remote monitoring system S includes a plurality of drones Dn (n=1, 2, 3, . . .), a plurality of operator terminals Tm (m=1, 2, ...), and a management server MS (an example of an information processing device). The drone Dn, the operator terminal Tm, and the management server MS are each connected to a communication network NW. The communication network NW includes, for example, the Internet, a mobile communication network, a radio base station thereof, and the like.

The drone Dn is an example of an unmanned flying object, and is also referred to as a multicopter, or an UAV (Unmanned Aerial Vehicle). The drone Dn is capable of taking off according to takeoff instructions from a GCS (Ground Control Station) and flying autonomously. The drone Dn is used for, for example, delivery, surveying, photographing, monitoring, and the like. The GCS is installed as an application in the operator terminal Tm, for example, and is configured to be cooperated with the management server MS. Incidentally, the drone Dn can also fly according to remote control from the ground using a pilot (control) terminal installing the GCS.

The drone Dn is under jurisdiction (control) of any one of a plurality of drone bases Bm (in other words, the drone Dn belongs to any drone bases Bm). The drone base Bm is a base (e.g., a facility) where the drone Dn can take off and land. In the example of FIG. 1, each of the drones D1 to D4 is under jurisdiction of the drone base B1 (i.e., belong to the drone base B1), departs (takes off) from the drone base B1, and returns (lands) to the drone base B1. Moreover, each of the drones D5 to D9 is under jurisdiction of the drone base B2, departs from the drone base B2, and returns to the drone base B2. However, one drone Dn may be under jurisdiction of the plurality of the drone bases Bm (i.e., may belong to the plurality of drone bases Bm). For example, the drone D11 (not shown) may depart from the drone base B2 and return to the drone base B1. Incidentally, the number of drones Dn under jurisdiction of one drone base Bm is not particularly limited.

Moreover, in the drone base Bm, a port Pm used for takeoff and landing of drone Dn and a base instrument Em (an example of an instrument, a device, or an equipment) used for monitoring drone Dn are installed. At the drone base Bm, a base staff manually performs a pre-flight inspection (e.g., checking vehicle status or condition) of the drone Dn (hereinafter, the inspection is referred to as "manual inspection"). For example, the base staff visually inspects a predetermined portion of the drone Dn for each inspection item of the manual inspection, or inspects the predetermined portion of the drone Dn by touching it. Then, manual inspection result information (an example of base information) indicating the result of the manual inspection by the base staff is transmitted to the management server MS via the communication network NW from a terminal (an example of an instrument) such as a smartphone of the base staff. Moreover, the drone Dn, which has completed the pre-flight inspection, is placed at the port Pm and takes off (departs) from the port Pm according to a predetermined schedule. Moreover, the drone Dn that has returned to the drone base Bm lands at the port Pm. Incidentally, a plurality of ports Pm may be installed at one drone base Bm.

The base instrument Em is connected to the communication network NW, is equipped with a base camera (e.g., an RGB camera or an infrared camera) for monitoring the drone Dn. The base instrument Em stores a base ID (identification information) for identifying the drone base Bm. The base camera is configured to sequentially (continuously) capture (image) drone Dn placed, for example, at the port Pm or an inspection place. Base image information (an example of base information) representing images (still images or moving images) captured by the base camera is transmitted from the base instrument Em to the management server MS together with the base ID. Incidentally, a plurality of base instruments Em may be installed at one drone base Bm. Moreover, the base instrument Em may be provided with a wind sensor that detects (measures) at least one of wind speed and wind direction. Measurement information (an example of base information) measured by the wind sensor is transmitted from the base instrument Em to the management server MS. Furthermore, the base instrument Em may be provided with at least one of a temperature sensor, a humidity sensor, a rainfall (snow) amount sensor, and an air pressure sensor (aerotonometer). Measurement information (an example of base information) measured by these sensors is transmitted from the base instrument Em to the management server MS.

The operator terminal Tm is a terminal used by an operator OPm who remotely monitors the plurality of drones Dn. For example, the operator OP1 monitors the drones D1 to D4 that he/she is in charge of while looking at information displayed on a screen (a user interface screen) of the operator terminal T1. Such monitoring includes, for example, at least one of (i) checking the status of the pre-flight inspection of each of the plurality of drones Dn, (ii) monitoring the condition of each of the plurality of drones Dn before flight, (iii) monitoring the condition of each of the plurality of drones Dn in flight. During the period in which such monitoring is performed, there is a timing that requires gazing to a specific portion (i.e., the operator OPm has to pay attention to the specific portion, or has to look carefully at the specific portion) on the screen, and such timing is referred to as "gaze timing" (in other words, gaze required timing). Namely, the specific portion (hereinafter referred to as "gaze portion") on the screen is the portion being requested (urged) to be gazed by the operator OPm. In other words, the gaze portion is a portion on the screen at which the operator OPm is requested to gaze. Examples of the gaze portion include a character string, an item, a tab, and an image(video) and the like. The gaze portion is highlighted on the screen. The highlighting includes displaying in a conspicuous (prominent) display manner (e.g., display color, display size, display mode, etc.). Incidentally, the gaze timing may be a time point, or may have a certain length of time (time width). Examples of the gaze timing include a time when drone Dn takes off or when drone Dn lands.

The management server MS is composed of one or a plurality of server computers that manages information on the drone base Bm for each drone base Bm. The information relating to the drone base Bm includes, for example, information on the drone Dn under the jurisdiction of the drone base Bm, information on the operator OPm who monitors the drone Dn, and information on the operator terminal Tm used by the operator OPm. The management server MS identifies the plurality of drones Dn for which the operator OPm who has logged in by operating the operator terminal Tm is in charge, and controls to displays a list (hereinafter referred to as "drone list") showing the identified plurality of drones Dn on the operator terminal Tm of the operator OPm. Moreover, the management server MS regularly or irregularly receives weather information at the drone base Bm from a weather management server (not shown) via the communication network NW. The weather information indicates the weather (fine, rain, snow, cloudy, etc.) at the drone base Bm.

### [1-1. Configuration and Function of Drone Dn]

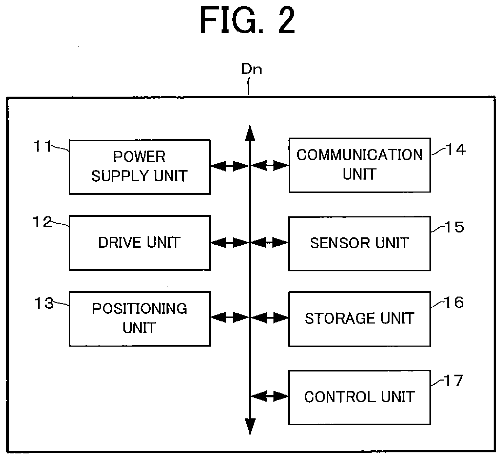

Next, a configuration and a function of the drone Dn will be described with reference to FIG. 2. FIG. 2 is a diagram illustrating a schematic configuration example of the drone Dn. As illustrated in FIG. 2, the drone Dn includes a power supply unit 11, a drive unit 12, a positioning unit 13, a communication unit 14, a sensor unit 15, a storage unit 16, a control unit 17, and the like. Furthermore, the drone Dn includes a propeller (a rotor), which is a horizontal rotary wing, an arm pipe (including an arm joint) for attaching the propeller to a drone main body (a housing), and the like. Incidentally, in a case where the drone Dn is used for delivery of an article, the drone Dn includes a holding mechanism or the like for holding the article.

The power supply unit 11 includes a detachable battery (an electric storage device) and the like. The power supply unit 11 supplies (supplies electricity) power stored in the battery to each unit of the drone Dn. Moreover, the power supply unit 11 sequentially measures a remaining battery capacity. Battery information indicating the remaining battery capacity measured by the power supply unit 11 is output to the control unit 17. The drive unit 12 includes a motor, a rotation shaft, and the like. The drive unit 12 rotates the plurality of rotors by a motor, a rotation shaft, and the like that are driven in accordance with a control signal output from the control unit 17.

The positioning unit 13 includes a radio wave receiver, an altitude sensor, and the like. The positioning unit 13 receives, for example, a radio wave transmitted from positioning satellites of a GNSS (Global Navigation Satellite System) such as a GPS (Global Positioning System) by a radio wave receiver, and sequentially detects, on the basis of the radio wave, a current position of the drone Dn. The current position of the drone Dn may be expressed by the latitude and longitude of the drone Dn, or by the latitude, longitude, and altitude of the drone Dn. Here, the positioning satellites may include satellites used by a plurality of satellite positioning systems, such as GPS (Global Positioning System) satellites, Michibiki (QZSS: Quasi-Zenith Satellite System) satellites, and Galileo satellites. Position information indicating the current position detected by the positioning unit 13 is sequentially output to the control unit 17. At this time, capture number (satellite capture number) information indicating the number (hereinafter referred to as "capture number") of positioning satellites captured by the positioning unit 13 is sequentially output to the control unit 17. Incidentally, the positioning unit 13 may detect the altitude of the drone Dn by the altitude sensor. In this case, the position information indicating the current position of the drone Dn includes altitude information indicating the altitude detected by the altitude sensor. The communication unit 14 has an antenna and a wireless communication function, and is responsible for controlling communication performed via the communication network NW.

The sensor unit 15 includes various sensors used to control the drone Dn. Examples of the various sensors include a compass (a geomagnetic sensor), a gyro (a triaxial angular speed sensor), a triaxial acceleration sensor, an atmospheric pressure sensor, a gimbal, an optical sensor, a range finder (a distance meter), and the like. The optical sensor includes a vehicle (aircraft) camera (for example, an RGB camera and an IR (Infrared ray) camera) and the like. The vehicle camera (i.e., drone camera) is configured, for example, to sequentially capture images of the surroundings of the drone Dn (for example, in front of or below the drone Dn). Incidentally, the direction of the vehicle camera (e.g., forward or downward of the drone Dn) can be controlled by the control unit 17. Sensing information sensed by the sensor unit 15 is output to the control unit 17. The storage unit 16 includes a nonvolatile memory or the like, and stores various programs and data. Moreover, the storage unit 16 stores a vehicle ID (identification information) for identifying the drone Dn.

The control unit 17 includes at least one CPU (Central Processing Unit), an ROM (Read Only Memory), an RAM (Random Access Memory), and the like, and controls the drone Dn on the basis of the position information from the positioning unit 13 and the sensing information from the sensor unit 15. Such control includes control of a rotation speed of a propeller, control of a position, a posture, and a traveling direction of the drone Dn, and the like. The position information (i.e., the position information from the positioning unit 13) of the drone Dn, vehicle image information (an example of vehicle information) representing images (still images or moving images (video)) captured by the vehicle camera, the battery information (an example of vehicle information) from the power supply unit 11, and the capture number information (an example of vehicle information) from the positioning unit 13 are transmitted to the management server MS via the communication network NW together with the vehicle ID of the drone Dn.

Moreover, the control unit 17 has a self-diagnosis function, and performs an automatic inspection for each inspection item on whether a predetermined portion (for example, the power supply unit 11, the drive unit 12, the positioning unit 13, the communication unit 14, the sensor unit 15, or the like) of the drone Dn normally operates. The inspection items of the automatic inspection include, for example, the remaining battery capacity, a battery cell balance, the GPS, the compass, the gyro, the acceleration sensor, the air pressure sensor (atmospheric pressure sensor), the gimbal, the optical sensor, the range finder, and the like. Automatic inspection result information indicating results of the automatic inspection by the drone Dn (that is, the control unit 17) is transmitted to the management server MS via the communication network NW. Incidentally, the automatic inspection by the drone Dn is performed before the drone Dn flies, but some inspection items of the automatic inspection are also performed during the drone Dn flies.

### [1-2. Configuration and Function of Operator Terminal Tm]

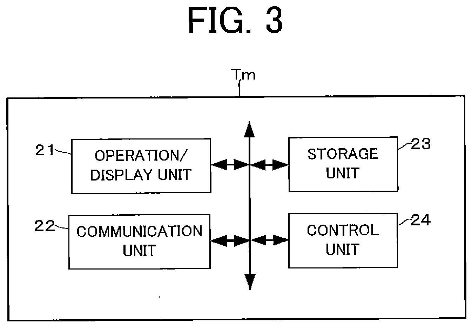

Next, a configuration and a function of the operator terminal Tm will be described with reference to FIG. 3. FIG. 3 is a diagram illustrating a schematic configuration example of the operator terminal Tm. The operator terminal Tm includes an operation/display unit 21, a communication unit 22, a storage unit 23, a control unit 24, and the like. Incidentally, as the operator terminal Tm, for example, a personal computer can be applied. The operator terminal Tm may include a voice processing unit and a speaker. The operation/display unit 21 has, for example, an input function for accepting input (selection) by a finger, pen, or mouse of the operator OPm, and a display function for displaying various screens on a display.

The communication unit 22 controls communication performed via the communication network NW. The storage unit 23 includes a non-volatile memory or the like, and stores various programs (program code groups) and pieces of data. The various programs include an operating system (OS), a monitoring application, the GCS, and a web browser. The monitoring application is mainly a program for acquiring and displaying the drone list indicating the plurality of drones Dn for which the operator OPm is in charge from the management server MS. Incidentally, the monitoring application may be downloaded from a predetermined server to the operator terminal Tm.

The control unit 24 (an example of a computer) includes at least one CPU, a ROM, an RAM, and the like, and executes processing according to the monitoring application stored in the ROM (or, the storage unit 23). When the monitoring application is activated in response to an instruction of the operator OPm, the control unit 24 displays a login screen on the display. Then, when a user ID and a password are input by the operator OPm through the login screen, the control unit 24 transmits a login request including the user ID and the password to the management server MS via the communication unit 22 and the communication network NW. The user ID is identification information for identifying the operator OPm.

Then, when the operator OPm logs in in response to the login request, display control data for displaying the drone list is transmitted from the management server MS, wherein the drone list indicates the plurality of drones Dn for which the logged-in operator OPm is in charge. Thereby, the control unit 24 displays a drone monitoring screen including the drone list on the display. Here, the plurality of drones Dn indicated in the drone list may be under the jurisdiction of the same drone base Bm, or may be under the jurisdiction of different drone bases Bm. In the latter case, the drone list indicates the drones Dn (e.g., the drones D1 to D4 and drones D5 to D9) belonging to each of the plurality of drone bases Bm (e.g., the drone base B1 and drone base B2). This allows the operator OPm to monitor each drone Dn under the jurisdiction of the plurality of drone bases Bm. Incidentally, the display control data may be data of a web page displayed by the web browser. The display control data of the drone monitoring screen may be incorporated into the monitoring application.

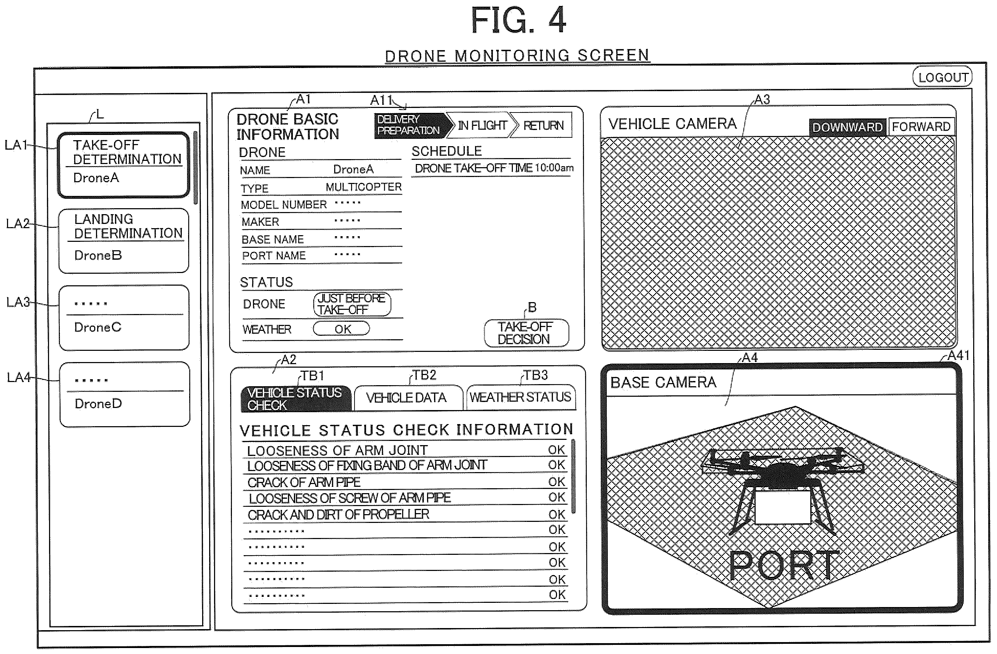

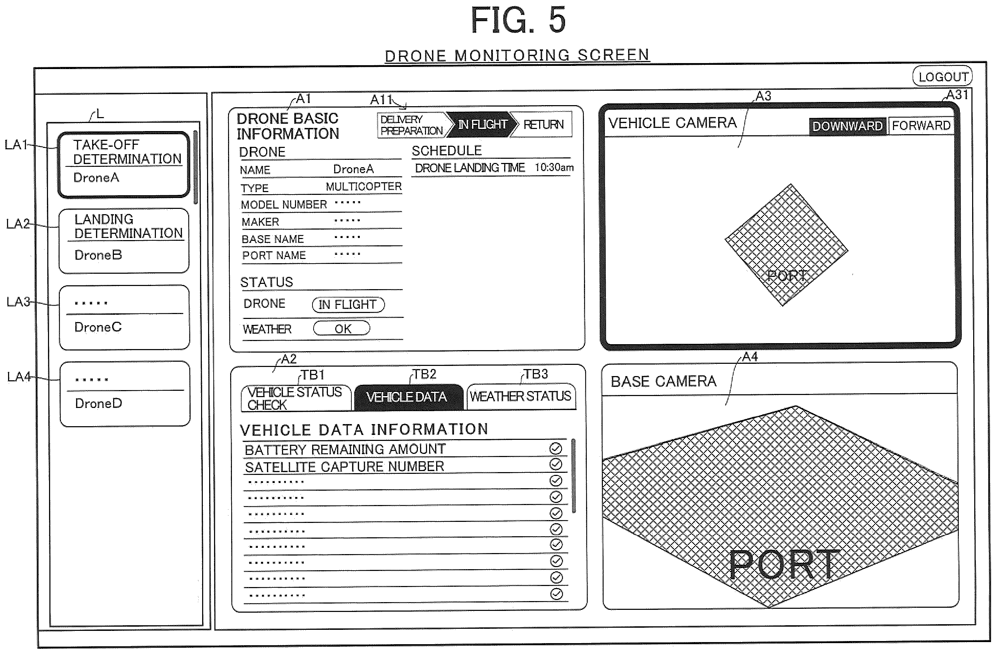

FIGS. 4 and 5 are a diagram illustrating a display example of the drone monitoring screen displayed on the operator terminal T1 of the operator OP1. As illustrated in FIGS. 4 and 5, as an example, a drone list L indicating (showing) the drones D1 to D4 under the jurisdiction of the drone base B1 are displayed on the drone monitoring screen. Furthermore, a drone basic information display area A1, a drone detailed information display area A2, a vehicle camera (drone camera) display area A3, and a base camera display area A4 and the like are provided on the drone monitoring screen. The drone list L includes simple information display areas LA1 to LA4 corresponding to each of the drones D1 to D4 for which the operator OP1 is in charge. The simple information display areas LA1 to LA4 are scrollable. The names (drone names) of the drones D1 to D4 are displayed. Incidentally, the drone list L may include simple information display areas corresponding to each of the drones D5 to D9 for which the operator OP1 is in charge.

Moreover, the simple information display areas LA1 to LA4 are selectable by the operator OP1. In other words, the drone D1 to D4 can be selected via the simple information display areas LA1 to LA4. In the display examples of FIGS. 4 and 5, since the drone D1 is in the selected state in response to selecting (pressing) of the simple information display area LA1 by the operator OP1 in order to determine a take-off of the drone D1, monitoring information (obtained from the management server MS as appropriate) for monitoring the drone D1 in the selected state is displayed in the drone basic information display area A1, the drone detailed information display area A2, the vehicle camera display area A3, and the base camera display area A4. Here, the monitoring information includes, for example, the manual inspection result information, the base image information, vehicle data information, the vehicle image information, the weather information, and the like. Incidentally, in the display example of FIG. 4, the drone D1 is placed in the port P1 for take-off at the drone base B1 and is in a state where it is waiting for the take-off decision by the operator OP1. On the other hand, in the display example of FIG. 5, the drone D1 is in a state of flying (rising) above the port P1.

The basic information of the drone D1, the status of the drone D1, the phase of the drone D1, the schedule of the drone D1, the weather information of the drone base B1, and a take-off decision button B are displayed in the drone basic information display area A1. Incidentally, the measurement information measured by the sensor provided with the base instrument Em may be displayed in the drone basic information display area A1. In the display example of FIGS. 4 and 5, the basic information of the drone D1 includes, for example, drone name, type, model number, manufacturer (maker), base name (name of the drone base B1), and port name (name of port P1) of the drone D1, but is not particularly limited. The status (hereinafter referred to as "drone status") of the drone D1 indicates what kind of status the drone D1 is. In the display example of FIG. 4, the drone status is "JUST BEFORE TAKE-OFF", while in the display example of FIG. 5, the drone status is "IN FLIGHT". Such drone status includes, for example, staying (waiting) on the ground, before flight (before take-off), dropping of delivered article, just before landing, in (during) return, error occurrence, etc., in addition to just before take-off and in flight. The error occurrence is, for example, the drone status when some abnormality is detected by the automatic inspection by the drone Dn.

The phase (hereinafter referred to as the "drone phase") of drone D1 roughly indicates what kind of phase the drone D1 is. In the display examples of FIGS. 4 and 5, "DELIVERY PREPARATION", "IN FLIGHT", and "RETURN" are displayed, as the drone phase, in the phase display area A11. Then, in the phase display area A11 of FIG. 4, "DELIVERY PREPARATION" is displayed. On the other hand, in the phase display area A11 of FIG. 5, "IN FLIGHT" is displayed. The display contents of the phase display area A11 are changed (switched) according to changing (switching) of the drone phase. Incidentally, the drone status and the drone phase may be referred to as the same term (e.g., in flight). The schedule of the drone D1 includes, for example, a scheduled time of at least one of take-off, flight, landing, return, and the like of the drone D1.

In the display examples of FIG. 4, a vehicle status check tab TB1, a vehicle data tab TB2, and a weather status tab TB3 are provided in the drone detailed information display area A2. The vehicle status check tab TB1 is selected and displayed among the tabs TB1 to TB3, and therefore the vehicle status check information is displayed below the tabs TB1 to TB3. When the drone status is just before take-off, the vehicle status check tab TB1 is automatically selected, and the vehicle status check information is displayed so as to urge gazing to the operator OP1. The displaying the vehicle status check information in this manner can also be called highlighting of the vehicle status check information. This allows the operator OP1 to grasp at a glance the gaze portion that requires gazing according to the current drone status of the drone D1. The vehicle status check information is based on the manual inspection result information described above. In the display examples of FIG. 4, "OK" as displayed in association with the inspection item "LOOSENESS OF ARM JOINT", which is included in the vehicle status check information, indicates for example, that the result of this manual inspection (vehicle status check) is fine (good).

On the other hand, in the display examples of FIG. 5, the vehicle data tab TB2 is selected and displayed among the tabs TB1 to TB3, and therefore the vehicle data information is displayed below the tabs TB1 to TB3. The displaying the vehicle data information in this manner can also be called highlighting of the vehicle data information. The vehicle data information is based on the battery information (battery remaining amount) and the capture number information (satellite capture number). A check mark as displayed in association with the item "BATTERY REMAINING AMOUNT", which is included in the vehicle data information, indicates, for example, that the battery remaining amount is fine (good). For example, when the drone status changes from "JUST BEFORE TAKE-OFF" illustrated FIG. 4 to "IN FLIGHT" illustrated in FIG. 5, the selection display is automatically changed (switched) from the vehicle status check tab TB1 to the vehicle data tab TB2. Incidentally, the tabs TB1 to TB3 can be manually selected by the operator OP1, and for example, when the weather status TB3 is selected, the weather information of the drone base B1 is displayed below the tabs TB1 to TB3.

In the display examples of FIG. 4, the moving image (hereinafter referred to as "vehicle camera image") captured by the vehicle camera of the drone D1 is displayed in the vehicle camera display area A3. On the other hand, the moving image (hereinafter referred to as "base camera image") captured by the base camera of the base instrument E1 is displayed in the base camera display area A4. In the display example of FIG. 4, the drone status is "JUST BEFORE TAKE-OFF", which corresponds to the gaze timing, and therefore the base camera image is highlighted as the gaze portion (i.e., the specific portion being urged to be gazed). For example, the frame A41 of the base camera display area A4 is displayed in red (i.e., changing from in black to in red). In the case where the drone status is "JUST BEFORE TAKE-OFF", when the operator OP1 selects (presses) the take-off decision button B in the drone basic information display area A1, a take-off command is transmitted to the drone D1. As a result, when the drone D1 takes off from the port P1, the display of the drone status and the drone phase changes to "IN FLIGHT" as illustrated in Fig. 5, and in synchronization with this, the highlighting is changed from the base camera image to the vehicle camera image. For example, the frame A31 of the vehicle camera display area A3 is displayed in red (i.e., changing from in black to in red). Therefore, the change in the drone phase can be conveyed to the operator OP1 in a more easily understandable manner than by displaying the drone status and the drone phase. Incidentally, at this time, the highlighting of the base camera image is stopped (i.e., the display returns to normal). After that, when the drone D1 reaches the waypoint above the port P1 and starts flying toward a delivery destination, the highlighting of the vehicle camera image is stopped.

### [1-3. Configuration and Function of Management Server MS]

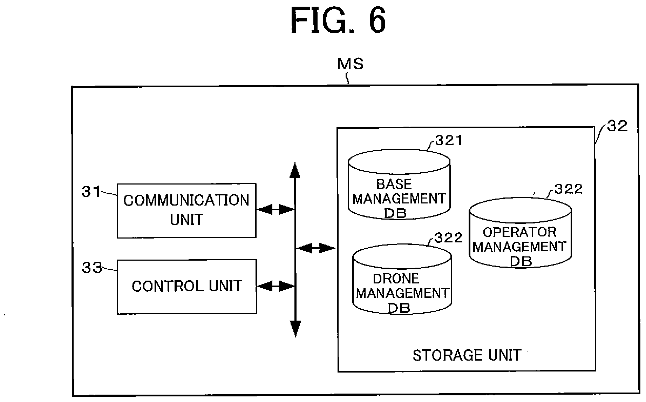

Next, a configuration and a function of the management server MS will be described with reference to FIG. 6. FIG. 6 is a diagram illustrating a schematic configuration example of the management server MS. As illustrated in FIG. 6, the management server MS includes a communication unit 31, a storage unit 32, a control unit 33, and the like. The communication unit 31 controls communication performed via the communication network NW. The manual inspection result information, the base image information, the measurement information, and the base ID of the drone base Bm which are transmitted from the base instrument Em, are received by the communication unit 31. The battery information, the capture number information, the vehicle image information, the position information of the drone Dn, and the vehicle ID of the drone Dn which are transmitted from drone Dn, are received by the communication unit 31. The management server MS can recognize the current position of the drone Dn based on the position information of the drone Dn. Moreover, the login request transmitted from the operator terminal Tm is received by the communication unit 31. Moreover, the weather information transmitted from the weather management server is received by the communication unit 31.

The storage unit 32 includes, for example, a hard disk drive or the like, and stores an operating system, various programs including an application, and the like. Here, the application includes a program for executing an information display method. The program may be stored in a non-transitory computer readable memory. Furthermore, a base management database (DB) 321, a drone management database (DB) 322, and an operator management database (DB) 323 are constructed in the storage unit 32.

The base management database 321 is a database for managing information on the drone base Bm. In the base management database 321, for example, the base ID of the drone base Bm, the base image information, the measurement information, the weather information, the vehicle ID of the drone Dn under the jurisdiction of the drone base Bm, and the like are stored in association with each drone base Bm. Incidentally, the base image information, the measurement information, and the weather information may be appropriately updated each time they are received by the communication unit 31.

The drone management database 322 is a database for managing information on the drone Dn. In the drone management database 322, the vehicle ID (drone ID), the position information, the basic information, the drone status, the drone phase, the schedule (drone schedule), the manual inspection result information, the vehicle data information, the vehicle image information, and the like are stored in association with each drone Dn. The vehicle data information includes, for example, the battery information, the capture number information, and the like. Incidentally, the manual inspection result information, the vehicle data information, the vehicle image information may be appropriately updated each time they are received by the communication unit 31. Moreover, the drone status and the drone phase of the drone Dn are updated appropriately based on, for example, various information received by the communication unit 31, the schedule of the drone Dn, or instruction information from a manager (administrator), etc.

The operator management database 323 is a database for managing information on the operator OPm. In the operator management database 323, the user ID of the operator OPm, the password of the operator OPm, a login status, the vehicle ID of each of the plurality of drones Dn for which the operator OPm is in charge, a name of the operator OPm, and the like are stored in association with each operator OPm. Here, the login status indicates whether the operator OPm logs in.

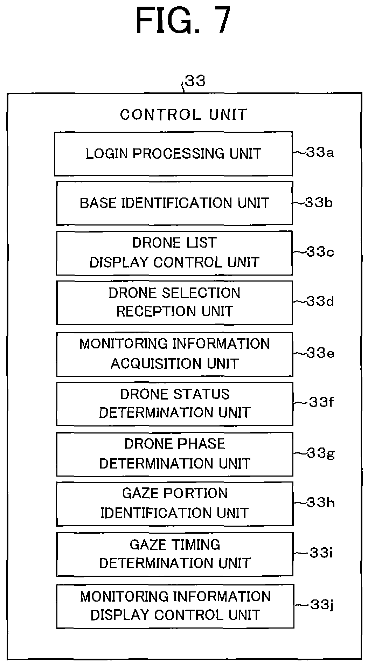

The control unit 33 (an example of a computer) includes at least one CPU, a ROM, an RAM, and the like, and performs various processes according to the programs (program code) stored in the storage unit 32 or the non-transitory computer readable memory. FIG. 7 is a diagram illustrating an example of functional blocks in the control unit 33. The control unit 33 functions a login processing unit 33a, a base identification unit 33b (an example of a base identification unit), a drone list display control unit 33c (an example of a first display control unit), a drone selection reception unit 33d, a monitoring information acquisition unit 33e (an example of a first acquisition unit and a second acquisition unit), a drone status determination unit 33f (an example of a first identification unit and a detection unit), a drone phase determination unit 33g (an example of a first identification unit and a detection unit), a gaze portion identification unit 33h (an example of a second identification unit), a gaze timing determination unit 33i (an example of a determination unit), and a monitoring information display control unit 33j (an example of a second display control unit) as illustrated in FIG. 7, in accordance with the program (the program code).

The login processing unit 33a performs login processing of the operator OPm in response to a login request from the operator terminal Tm. In the login processing, it is determined whether a set of the user ID and the password included in the login request is registered in the operator management database 323. Then, when the set of the user ID and the password is registered, the operator OPm who uses the operator terminal Tm that has transmitted the login request is identified (identified by the user ID), and the operator OPm logs in.

When the operator OPm is identified by the login process, the base identification unit 33b identifies the plurality of drones Dn for which the operator OPm is in charge, and identifies the drone base Bm to which the identified drone Dn belongs for each drone Dn. For example, in the operator management database 323, the drone Dn identified by the vehicle ID associated with the user ID of the logged-in operator OPm is identified as the drone Dn for which the operator OPm is in charge. Then, the drone base Bm identified by the base ID (that is, the base ID associated with the vehicle ID in the base management database 321) associated with the vehicle ID of the identified drone Dn is identified as the drone base Bm to which the drone Dn belongs.

The drone list display control unit 33c generates the drone list (including, for example, the drone name and the vehicle ID) indicating the drone Dn for which the logged-in operator OPm is in charge. Then, the drone list display control unit 33c transmits, to the operator terminal Tm of the logged-in operator OPm, a display control data for causing the generated drone list to be displayed. As a result, the drone list is displayed on the drone monitoring screen of the operator terminal Tm, for example, as illustrated in FIG 4.

The drone selection reception unit 33d receives, from the operator terminal Tm via the communication unit 22, selection information of any one of the drone Dn selected by the logged-in operator OPm from among the plurality of drone Dn indicated in the drone list as displayed on the drone monitoring screen of the operator terminal Tm. The selection information includes information (e.g., the drone name or the vehicle ID) for identifying the drone Dn selected by the logged-in operator OPm. The drone selection reception unit 33d receives (accepts) the selection of the drone Dn by the selection information.

The monitoring information acquisition unit 33e acquires the monitoring information for monitoring the drone Dn (i.e., the drone Dn whose the selection has been accepted by the drone selection reception unit 33d) selected by the logged-in operator OPm. For example, the monitoring information acquisition unit 33e acquires, as the monitoring information from the drone management database 322, the basic information, the drone status, the drone phase, the schedule, the manual inspection result information, the vehicle data information, the vehicle image information, and the like which are associated with the vehicle ID of the selected drone Dn. Furthermore, the monitoring information acquisition unit 33e acquires, as monitoring information from the base management database 321, the base image information, the measurement information, the weather information and the like which are associated with the base ID of the drone base Bm to which the drone Dn selected by the logged-in operator OPm belongs, among the drone bases Bm (for example, the plurality of the drone bases Bm) identified by the base identification unit 33b. This makes it possible to quickly present, to the operator OPm, the base information of the drone base Bm to which the plurality of the drones Dn (i.e., the drones Dn for which the operator OPm is in charge) belong.

The drone status determination unit 33f identifies the current drone status of the drone Dn selected by the logged-in operator OPm on the basis of the monitoring information acquired by the monitoring information acquisition unit 33e. Furthermore, even after identifying the current drone status of the drone Dn from the monitoring information, the drone status determination unit 33f may identify the current drone status of the drone Dn by referring to the drone management database 322 at intervals of a predetermined time (e.g., 1 second to 60 seconds). Then, the drone status determination unit 33f detects a change (e.g., switching from "just before take-off" to "in flight") of the current drone status of the drone Dn selected by the logged-in operator OPm.

The drone phase determination unit 33g identifies the current drone status of the drone Dn identifies the current drone phase of the drone Dn selected by the logged-in operator OPm on the basis of the monitoring information acquired by the monitoring information acquisition unit 33e. Furthermore, even after identifying the current drone phase of the drone Dn from the monitoring information, the drone phase determination unit 33g may identify the current drone phase of the drone Dn by referring to the drone management database 322 at intervals of a predetermined time. Then, the drone phase determination unit 33g detects a change (e.g., switching from "delivery preparation" to "in flight") of the current drone phase of the drone Dn selected by the logged-in operator OPm.

The gaze portion identification unit 33h identifies the gaze portion at which the logged-in operator OPm is requested to gaze, based on the current drone status identified by the drone status determination unit 33f. For example, in a case where the drone status is "just before take-off", the vehicle status check information as illustrated in FIG. 4 is identified as the gaze portion. Moreover, in a case where the drone status is "just before take-off", the base camera image may be identified as the gaze portion. On the other hand, in a case where the drone status is "in flight" or "error occurrence", the vehicle data information as illustrated in FIG. 5 is identified as the gaze portion. Moreover, until the drone Dn whose the drone status is "in flight" reaches the waypoint above the port Pm, the vehicle camera image may be identified as the gaze portion. At this time, the orientation (direction) of the vehicle camera is preferably identified as downward. Incidentally, until the drone Dn whose the drone status is "in flight" drops the delivered article in the delivery destination from the time when the drone Dn reaches the waypoint above the port Pm, the vehicle camera image may be identified as the gaze portion. At this time, the orientation of the vehicle camera is preferably identified as forward.

Moreover, the gaze portion identification unit 33h may identify the gaze portion at which the logged-in operator OPm is requested to gaze, based on the current drone phase identified by the drone phase determining unit 33g. For example, in a case where the drone status is "delivery preparation", the base camera image as illustrated in FIG. 4 is identified as the gaze portion. On the other hand, in a case where the drone status is "in flight", the vehicle camera image as illustrated in FIG. 5 is identified as the gaze portion. Incidentally, in a case where the drone phase is "return", the base camera image and the vehicle camera image may not be identified as the gaze portion. Furthermore, even after identifying the gaze portion, the gaze portion identification unit 33h may identify, at intervals of a predetermined time, the gaze portion at which the logged-in operator OPm is requested to gaze, based on the current drone status or the drone phase of the drone Dn selected by the logged-in operator OPm.

The gaze timing determination unit 33i determines, at intervals of a predetermined time based on the current drone status identified by the drone status determination unit 33f or the current drone phase identified by the drone phase determination unit 33g, whether the gaze timing at which the logged-in operator OPm is to gaze at the gaze portion has arrived (in other words, the gaze timing to be gazed by the logged-in operator OPm has arrived). For example, when the change of the current drone status is detected by the drone status determination unit 33f, it is determined that the gaze timing has arrived. In this case, when it is detected that the current drone status has been switched to "just before take-off" (alternatively, dropping of delivered article, just before landing, or error occurrence), it may be preferably determined that the gaze timing has arrived. Alternatively, when the change of the current drone phase is detected by the drone phase determination unit 33g, it may be determined that the gaze timing has arrived.

The monitoring information display control unit 33j transmits, to the operator terminal Tm of the logged-in operator OPm, a display control data for causing the monitoring information acquired by the monitoring information acquisition unit 33e to be displayed. As a result, the monitoring information is displayed on the drone monitoring screen of the operator terminal Tm, for example, as illustrated in FIG 4. At this time, the monitoring information display control unit 33j transmits, to the operator terminal Tm of the logged-in operator OPm, a highlighting control data for causing the gaze portion identified by the gaze portion identification unit 33h to be highlighted on the drone monitoring screen. Here, the highlighting control data may be transmitted to the operator terminal Tm together with the display control data for causing the monitoring information to be displayed. The highlighting control data includes information (for example, an identifier of the gaze portion or coordinates of the gaze portion or the like) that causes the operator terminal Tm to identify the gaze portion identified by the gaze portion identification unit 33h. As a result, the gaze portion is highlighted on the drone monitoring screen to the logged-in operator OPm, as described above. Therefore, it is possible for the operator OPm to grasp at a glance the portion that requires gazing especially on the drone monitoring screen.

Moreover, in the state that the monitoring information is displayed on the drone monitoring screen, when it is determined by the gaze timing determination unit 33i that the gaze timing has arrived, the monitoring information display control unit 33j may preferably transmit, to the operator terminal Tm of the operator OPm, a highlight display control data for causing the gaze portion identified at the gaze timing by the gaze portion identification unit 33h to be highlighted. This makes it possible to highlight the gaze portion at a necessary timing for the operator OPm. Therefore, the monitoring information display controller 33j can switch the highlighting of the gaze portion in response to detecting the change in the current drone status or the drone phase. Namely, it is possible to switch, for example, from the highlighting the base camera image to the highlighting the vehicle camera image, in synchronization with that the display of the current drone status or the drone phase has switched. Therefore, the operator OPm can more quickly and easily understand that the display of the current drone status or the drone phase has changed.

### [2. Operation of Remote Monitoring System S]

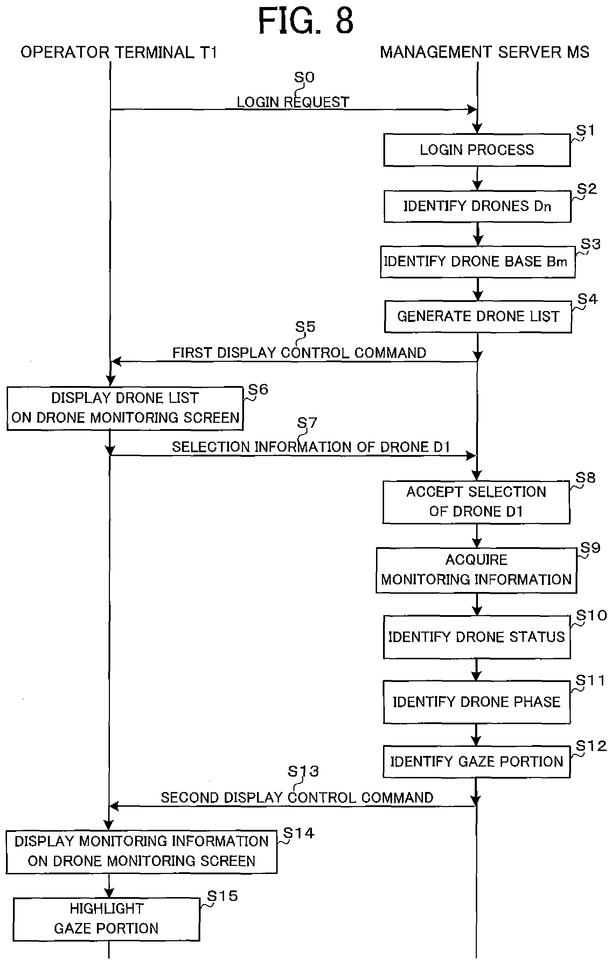

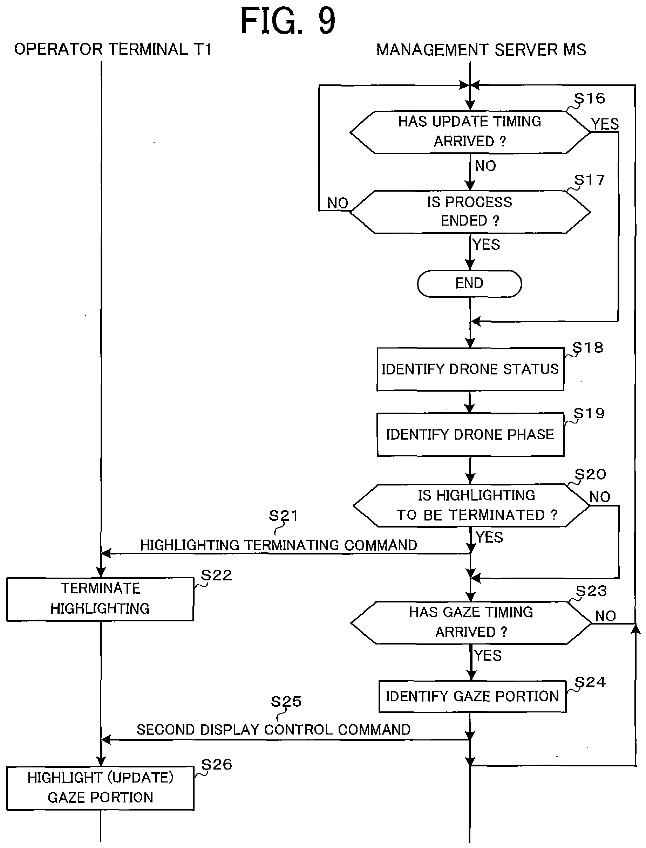

Next, an operation of the remote monitoring system S will be described with reference to FIGS.8 and 9. FIG. 8 is a sequence diagram illustrating an example of monitoring information display processing executed by the operator terminal T1 (the control unit 24) and the management server MS (the control unit 33). FIG. 9 is a sequence diagram illustrating an example of highlighting update processing executed by the operator terminal T1 (the control unit 24) and the management server MS (the control unit 33). Incidentally, in the following description of the operation, the case in which the drone Dn for which the operator OP1 (who uses operator terminal T1) is in charge, will be taken as an example.

In the operator terminal T1, when the monitoring application is activated in response to an instruction of the operator OP1, the login screen is displayed on the display. Then, the operator terminal T1 transmits a login request including the user ID and the password input by the operator OP1 through the login screen to the management server MS (step S0).

Next, when the management server MS receives the login request from the operator terminal T1, the management server MS performs the login process by the login processing unit 33a in response to the login request (step S1). In the login process, it is determined whether a set of the user ID and the password included in the login request is registered in the operator management database 323. For example, when the set of the user ID and the password included in the login request is stored in the operator management database 323, it is determined that the set of the user ID and the password is registered, and the operator OP1 using the operator terminal T1 logs in.

Next, the management server MS identifies the plurality of drones Dn for which the logged-in operator OP1 is in charge (step S2). For example, in the operator management database 323, the drones Dn are identified by the vehicle ID associated with the user ID of the operator OP1. Next, the management server MS identifies, by the base identification unit 33b, the drone base Bm to which the drone Dn belongs, for each drone Dn identified in step S2 (step S3). For example, in the base management database 321, the drone base Bm is identified by the base ID associated with the vehicle ID of the drone Dn identified in step S2. The drone base Bm identified here may be one or multiple.

Next, the management server MS generates the drone list indicating the plurality of drones Dn identified in step S2 (step S4). Next, the management server MS transmits, to the operator terminal T1 by the drone list display control unit 33c, a first display control command including the display control data for displaying the drone list generated in step S4 (step S5).

Next, when the operator terminal T1 receives the first display control command from the management server MS, the operator terminal T1 displays the drone list L on the drone monitoring screen in accordance with the display control data, for example, as illustrated in Fig. 4 (step S6). When the operator OP1 selects, for example, the drone D1 from among the drones Dn indicated in the displayed drone list L, the operator terminal T1 transmits the selection information of the drone D1 to the management server MS (step S7).

Next, when the management server MS receives the selection information from the operator terminal T1, the management server MS accepts, by the drone selection reception unit 33d, the selection of the drone D1 (step S8). Next, the management server MS acquires, by the monitoring information acquisition unit 33e, monitoring information for monitoring the drone D1 selected by the operator OP1 (step S9). Here, the monitoring information includes the basic information, the drone status, the drone phase, the schedule, the manual inspection result information, the vehicle data information, and the vehicle image information, with regard to the drone D1 selected from among the plurality of drone Dn identified in step S2. Furthermore, the monitoring information includes the base image information, the measurement information, and the like, with regard to the drone base B1 to which the selected drone D1 belongs, among the drone bases Bm identified in step S3.

Next, the management server MS identifies, by the drone status determination unit 33f, the current drone status of the drone D1 selected by operator OP1 (step S10). Next, the management server MS identifies, by the drone phase determination unit 33g, the current drone phase of the drone D1 selected by operator OP1 (step S11).

Next, the management server MS identifies, by the gaze portion identification unit 33h, the gaze portion at which the operator OP1 is requested to gaze, on the basis of the drone status identified in step S10 or the drone phase identified in step S11 (step S12). Here, the gaze portion identification unit 33h may identify the gaze portion (e.g., image) according to the drone status and the gaze portion according to the drone phase respectively. Namely, the gaze portion identification unit 33h may identify the gaze portions that differ from each other.

Next, the management server MS transmits, to the operator terminal T1 by the monitoring information display control unit 33j, a second display control command including the display control data for displaying the monitoring information acquired in step S9 and the highlighting control data for highlighting the gaze portion identified in step S12 (step S13).

Next, when the operator terminal T1 receives the second display control command transmitted from the management server MS in step S13, for example, as illustrated in FIG. 4, the operator terminal T1 displays the monitoring information including the vehicle information and the base information on the drone monitoring screen of the operator terminal Tm in accordance with the display control data (step S14), and highlights the gaze portion at which the operator OP1 is requested to gaze in accordance with the highlighting control data (step S15).

Next, in FIG. 9, the management server MS determines whether an update timing has arrived (step S16). For example, when a predetermined time (e.g., 1 second to 60 seconds) has elapsed since the previous transmission of the second display control command, it is determined that the update timing has arrived. When it is determined that the update timing has not arrived (step S16: NO), the process proceeds to step S17. On the other hand, when it is determined that the update timing has arrived (step S16: YES), the process proceeds to step S18.

In step S17, the management server MS determines whether to end the process. For example, when the operator OP1 logs out, it is determined that the process is ended (step S17: YES), and the processing illustrated in FIG. 8 is ended. On the other hand, when it is determined that the process is not ended (step S17: NO), the process returns to step S16.

In step S18, the management server MS identifies, by the drone status determination unit 33f, the current drone status of the drone D1 selected by the operator OP1. Next, the management server MS identifies, by the drone phase determination unit 33g, the current drone phase of the drone D1 selected by the operator OP1 (step S19).

The management server MS determines whether the highlighting is to be terminated (i.e., the highlighting should be terminated) on the drone monitoring screen (step S20). For example, when a predetermined time has elapsed since the start of the previous highlighting, it is determined that the highlighting is to be terminated. Moreover, it may be determined whether the highlighting is to be terminated on the drone monitoring screen based on the drone status identified in step S18 or the drone phase identified in step S19. For example, when the change of the current drone status or drone phase is detected, it is determined that the highlighting is to be terminated. Then, when it is determined that the highlighting is to be terminated (step S20: YES), the process proceeds to step S21. On the other hand, when it is determined that the highlighting is not to be terminated (step S20: NO), the process proceeds to step S23.

In step S21, the management server MS transmits, to the operator terminal T1, a highlighting terminating command to terminate the previous highlighting, and the process proceeds to step S23. Incidentally, if it is determined in step S20 that the highlighting is to be terminated based on the drone status or the drone phase, the highlighting terminating command may be transmitted to the operator terminal T1 together with the second display control command in step S25 described later.

Next, when the operator terminal T1 receives the highlighting terminating command transmitted from the management server MS in step S21, the operator terminal T1 terminates the highlighting of the gaze portion at which the operator OP1 is requested to gaze on the drone monitoring screen (step S22).

In step S23, the management server MS determines, based on the drone status identified in step S18 or the drone phase identified in step S19, whether the gaze timing at which the operator OP1 is to gaze at the gaze portion has arrived, by the gaze timing determination unit 33i. when it is determined that the gaze timing has not arrived (step S23: NO), the process returns to step S16. On the other hand, when it is determined that the gaze timing has arrived (step S23: YES), the process proceeds to step S24.

In step S24, the management server MS identifies, by the gaze portion identification unit 33h, the gaze portion at which the operator OP1 is requested to gaze, on the basis of the drone status identified in step S18 or the drone phase identified in step S19 (step S24). Next, the management server MS transmits, to the operator terminal T1 by the monitoring information display control unit 33j, a second display control command including the highlighting control data for highlighting the gaze portion identified in step S24 (step S25). As described above, the highlight terminating command may be transmitted to the operator terminal T1 together with the second display control command. Incidentally, after the process in step S25, the process returns to step S16.

Next, when the operator terminal T1 receives the second display control command transmitted from the management server MS in step S25, for example, as illustrated in FIG. 5, the operator terminal T1 highlights (updates the highlighting) the gaze portion at which the operator OP1 is requested to gaze on the drone monitoring screen in accordance with the highlighting control data (step S26). As a result, for example, in synchronization with the switching of the display of the current drone phase, the highlighting of the base camera image is switched to the highlighting of the vehicle camera image.

As described above, according to the embodiment, the management server MS controls to display the drone list on the drone monitoring screen of the operator terminal Tm of the operator OPm who monitors the plurality of the drones Dn, acquires the monitoring information including the vehicle information acquired by the drone Dn selected by the operator OPm from among the plurality of drones Dn indicated in the drone list, and the base information acquired by the base instrument Em at the drone base Bm where the selected drone Dn can take off and land, and controls to display the monitoring information on the drone monitoring screen. Therefore, it is possible to provide significant information useful for more monitoring to the operator OPm who monitors the plurality of drones Dn. Furthermore, the management server MS controls to highlight the gaze portion on the drone monitoring screen at a necessary timing for the operator OPm. Therefore, it is possible to provide a more convenient remote monitoring system for the operator OPm who monitors the plurality of drones Dn.

Incidentally, the above-described embodiment is one embodiment of the present invention, and the present invention is not limited to the above-described embodiment, changes from the above-described embodiment can be made on various configurations and the like, and such cases shall be also included in the scope of the present invention, which is defined by the appended independent claims. In the above embodiment, the drone Dn has been described as an example of the unmanned aerial vehicle, but the present invention is also applicable to a flying robot and the like as examples of the unmanned aerial vehicle.

### Reference Signs List

- 11: Power supply unit
- 12: Drive unit
- 13: Positioning unit
- 14: Communication unit
- 15: Sensor unit
- 16: Storage unit
- 17: Control unit
- 21: Operation/display unit
- 22: Communication unit
- 23: Storage unit
- 24: Control unit
- 31: Communication unit
- 32: Storage unit
- 33: Control unit
- 33a: Login processing unit
- 33b: Base identification unit
- 33c: Drone list display control unit
- 33d: Drone selection reception unit
- 33e: Monitoring information acquisition unit
- 33f: Drone status determination unit
- 33g: Drone phase determination unit
- 33h: Gaze portion identification unit
- 33i: Gaze timing determination unit
- 33j: Monitoring information display control unit
- Dn: Drone
- Tm: Operator terminal
- MS: Management server
- Em: Base instrument
- S: Remote monitoring system

## Claims

1. An information processing device (MS) comprising:
a first display control unit (33c) configured to display a list indicating a plurality of unmanned aerial vehicles (Dn) on a screen of a terminal (Tm) of an operator (OPm) who monitors the plurality of unmanned aerial vehicles;
a first acquisition unit (33e) configured to acquire vehicle information acquired by an unmanned aerial vehicle selected by the operator from among the plurality of unmanned aerial vehicles indicated in the list;
a second acquisition unit (33e) configured to acquire base information acquired by an instrument (Em) at a base (Bm) where the selected unmanned aerial vehicle can take off and land, wherein the base information is image information captured by a camera of the instrument at the base; and
a second display control unit (33j) configured to display the vehicle information acquired by the first acquisition unit and the base information acquired by the second acquisition unit on the screen of the terminal.

2. An information processing device according to claim 1, further comprising a base identification unit (33b) configured to identify, for each unmanned aerial vehicle of the plurality of unmanned aerial vehicles, a base to which the unmanned aerial vehicle belongs, wherein the second acquisition unit is configured to acquire the base information acquired by the instrument at the base to which the unmanned aerial vehicle selected by the operator belongs from among the bases identified by the base identification unit.

3. An information processing device according to claim 1 or claim 2, wherein the second display control unit is configured to highlight a specific portion on the screen on which the vehicle information and the base information are displayed, the specific portion being a portion on the screen at which the operator is requested to gaze.

4. An information processing device according to claim 3, further comprising: a first identification unit (33f) configured to identify a current status or phase of the unmanned aerial vehicle selected by the operator; and
a second identification unit (33h) configured to identify the specific portion based on the current status or phase of the unmanned aerial vehicle,
wherein the second display control unit is configured to highlight, on the screen, the specific portion identified by the second identification unit.

5. An information processing device
according to claim 3, further comprising:
a first identification unit (33f) configured to identify a current status or phase of the unmanned aerial vehicle selected by the operator; and
a determination unit (33i) configured to determine, based on the current status or phase of the unmanned aerial vehicle, whether a timing at which the operator is to gaze at the specific portion has arrived,
wherein the second display control unit is configured to highlight, on the screen, the specific portion in a case where it is determined that the timing at which the operator is to gaze at the specific portion has arrived;
or, according to claim 4, further comprising:
a determination unit (33i) configured to determine, based on the current status or phase of the unmanned aerial vehicle, whether a timing at which the operator is to gaze at the specific portion has arrived,
wherein the second display control unit is configured to highlight, on the screen, the specific portion in a case where it is determined that the timing at which the operator is to gaze at the specific portion has arrived.

6. An information processing device
according to claim 3,
further comprising a detection unit (33g) configured to detect a change of a current status or phase of the unmanned aerial vehicle selected by the operator,
wherein the second display control unit is configured to change highlighting of the specific portion on the screen in response to detecting the change of the current status or phase of the unmanned aerial vehicle; or,
according to claim 4 or 5, further comprising:
a detection unit (33g) configured to detect a change of the current status or phase of the unmanned aerial vehicle selected by the operator,
wherein the second display control unit is configured to change highlighting of the specific portion on the screen in response to detecting the change of the current status or phase of the unmanned aerial vehicle.

7. An information processing device according to claim 6, wherein the vehicle information includes first image information representing a first image captured by a first camera provided with the unmanned aerial vehicle selected by the operator,
wherein the image information represents a second image captured by the camera of the instrument at the base, the specific portion is the first image or the second image, and
the second display control unit is configured to change from highlighting the first image to the second image or from highlighting the second image to the first image on the screen in response to and in synchronization with detecting the change of the current status or phase of the unmanned aerial vehicle.

8. An information display method executed by one or more computers comprising:
displaying a list indicating a plurality of unmanned aerial vehicles (Dn) on a screen of a terminal (Tm) of an operator (OPm) who monitors the plurality of unmanned aerial vehicles;
acquiring vehicle information acquired by an unmanned aerial vehicle selected by the operator from among the plurality of unmanned aerial vehicles indicated in the list;
acquiring base information acquired by an instrument (Em) at a base (Bm) where the selected unmanned aerial vehicle can take off and land, wherein the base information is image information captured by a camera of the instrument at the base; and
displaying the acquired vehicle information and the acquired base information on the screen of the terminal.

9. An information processing program configured to cause a computer to:
display a list indicating a plurality of unmanned aerial vehicles (Dn) on a screen of a terminal (Tm) of an operator (OPm) who monitors the plurality of unmanned aerial vehicles;
acquire vehicle information acquired by an unmanned aerial vehicle selected by the operator from among the plurality of unmanned aerial vehicles indicated in the list;
acquire base information acquired by an instrument at a base where the selected unmanned aerial vehicle can take off and land, wherein the base information is image information captured by a camera of the instrument at the base; and
display the acquired vehicle information and the acquired base information on the screen of the terminal.

## Patentansprüche

1. Informationsverarbeitungsvorrichtung (MS), umfassend:
eine erste Anzeigesteuereinheit (33c), die konfiguriert ist, um eine Liste, die eine Vielzahl von unbemannten Luftfahrzeugen (Dn) angibt, auf einem Bildschirm eines Endgeräts (Tm) eines Bedieners (OPm) anzuzeigen, der die Vielzahl von unbemannten Luftfahrzeugen überwacht;
eine erste Erfassungseinheit (33e), die konfiguriert ist, um Fahrzeuginformationen zu erfassen, die durch ein unbemanntes Luftfahrzeug erfasst werden, das durch den Bediener aus der Vielzahl von unbemannten Luftfahrzeugen ausgewählt wird, die in der Liste angegeben werden;
eine zweite Erfassungseinheit (33e), die konfiguriert ist, um Basisinformationen zu erfassen, die durch ein Instrument (Em) an einer Basis (Bm) erfasst werden, an der das ausgewählte unbemannte Luftfahrzeug starten und landen kann, wobei die Basisinformationen Bildinformationen sind, die durch eine Kamera des Instruments an der Basis aufgenommen werden; und
eine zweite Anzeigesteuereinheit (33j), die konfiguriert ist, um die Fahrzeuginformationen, die durch die erste Erfassungseinheit erfasst werden, und die Basisinformationen, die durch die zweite Erfassungseinheit erfasst werden, auf dem Bildschirm des Endgeräts anzuzeigen.

2. Informationsverarbeitungsvorrichtung nach Anspruch 1, ferner umfassend eine Basisidentifikationseinheit (33b), die konfiguriert ist, um, für jedes unbemannte Luftfahrzeug der Vielzahl von unbemannten Luftfahrzeugen, eine Basis zu identifizieren, zu der das unbemannte Luftfahrzeug gehört, wobei die zweite Erfassungseinheit konfiguriert ist, um die Basisinformationen, die durch das Instrument an der Basis erfasst werden, zu der das unbemannte Luftfahrzeug, das durch den Bediener ausgewählt wird, gehört, aus den Basen zu erfassen, die durch die Basisidentifikationseinheit identifiziert werden.

3. Informationsverarbeitungsvorrichtung nach Anspruch 1 oder 2, wobei die zweite Anzeigesteuereinheit konfiguriert ist, um einen spezifischen Abschnitt auf dem Bildschirm hervorzuheben, auf dem die Fahrzeuginformationen und die Basisinformationen angezeigt werden, wobei der spezifische Abschnitt ein Abschnitt auf dem Bildschirm ist, auf den der Bediener aufgefordert wird zu blicken.

4. Informationsverarbeitungsvorrichtung nach Anspruch 3, ferner umfassend: eine erste Identifikationseinheit (33f), die konfiguriert ist, um einen aktuellen Status oder eine aktuelle Phase des unbemannten Luftfahrzeugs zu identifizieren, der durch den Bediener ausgewählt wird; und
eine zweite Identifikationseinheit (33h), die konfiguriert ist, um den spezifischen Abschnitt basierend auf dem aktuellen Status oder der aktuellen Phase des unbemannten Luftfahrzeugs zu identifizieren,
wobei die zweite Anzeigesteuereinheit konfiguriert ist, um, auf dem Bildschirm, den spezifischen Abschnitt hervorzuheben, der durch die zweite Identifikationseinheit identifiziert wird.

5. Informationsverarbeitungsvorrichtung nach Anspruch 3, ferner umfassend:
eine erste Identifikationseinheit (33f), die konfiguriert ist, um einen aktuellen Status oder eine aktuelle Phase des unbemannten Luftfahrzeugs zu identifizieren, das durch den Bediener ausgewählt wird; und
eine Bestimmungseinheit (33i), die konfiguriert ist, um, basierend auf dem aktuellen Status oder der aktuellen Phase des unbemannten Luftfahrzeugs, zu bestimmen, ob ein Zeitpunkt erreicht ist, zu dem der Bediener auf den spezifischen Abschnitt blicken soll,
wobei die zweite Anzeigesteuereinheit konfiguriert ist, um, auf dem Bildschirm, den spezifischen Abschnitt in einem Fall hervorzuheben, in dem bestimmt wird, dass der Zeitpunkt, zu dem der Bediener auf den spezifischen Abschnitt blicken soll, gekommen ist;
oder, nach Anspruch 4, ferner umfassend:
eine Bestimmungseinheit (33i), die konfiguriert ist, um, basierend auf dem aktuellen Status oder der aktuellen Phase des unbemannten Luftfahrzeugs, zu bestimmen, ob ein Zeitpunkt erreicht ist, zu dem der Bediener auf den spezifischen Abschnitt blicken soll,
wobei die zweite Anzeigesteuereinheit konfiguriert ist, um, auf dem Bildschirm, den spezifischen Abschnitt in einem Fall hervorzuheben, in dem bestimmt wird, dass der Zeitpunkt gekommen ist, zu dem der Bediener auf den spezifischen Abschnitt blicken soll.

6. Informationsverarbeitungsvorrichtung nach Anspruch 3,
ferner umfassend eine Erfassungseinheit (33g), die konfiguriert ist, um eine Änderung eines aktuellen Status oder einer aktuellen Phase des unbemannten Luftfahrzeugs zu erfassen, das durch den Bediener ausgewählt wird,
wobei die zweite Anzeigesteuereinheit konfiguriert ist, um das Hervorheben des spezifischen Abschnitts auf dem Bildschirm als Reaktion auf das Erfassen der Änderung des aktuellen Status oder der aktuellen Phase des unbemannten Luftfahrzeugs zu ändern; oder,
nach Anspruch 4 oder 5, ferner umfassend:
eine Erfassungseinheit (33g), die konfiguriert ist, um eine Änderung des aktuellen Status oder der aktuellen Phase des unbemannten Luftfahrzeugs zu erfassen, der durch den Bediener ausgewählt wird,
wobei die zweite Anzeigesteuereinheit konfiguriert ist, um das Hervorheben des spezifischen Abschnitts auf dem Bildschirm als Reaktion auf das Erfassen der Änderung des aktuellen Status oder der aktuellen Phase des unbemannten Luftfahrzeugs zu ändern.

7. Informationsverarbeitungsvorrichtung nach Anspruch 6, wobei die Fahrzeuginformationen erste Bildinformationen einschließen, die ein erstes Bild darstellen, das durch eine erste Kamera aufgenommen wird, die mit dem unbemannten Luftfahrzeug bereitgestellt wird, das durch den Bediener ausgewählt wird,
wobei die Bildinformationen ein zweites Bild darstellen, das durch die Kamera des Instruments an der Basis aufgenommen wird,
der spezifische Abschnitt das erste Bild oder das zweite Bild ist, und
die zweite Anzeigesteuereinheit konfiguriert ist, um als Reaktion auf und in Synchronisation mit dem Erfassen der Änderung des aktuellen Status oder der aktuellen Phase des unbemannten Luftfahrzeugs auf dem Bildschirm von dem Hervorheben des ersten Bilds zu dem zweiten Bild oder von dem Hervorheben des zweiten Bilds zu dem ersten Bild zu wechseln.

8. Informationsanzeigeverfahren, das durch einen oder mehrere Computer ausgeführt wird, umfassend:
Anzeigen einer Liste, die eine Vielzahl von unbemannten Luftfahrzeugen (Dn) angibt, auf einem Bildschirm eines Endgeräts (Tm) eines Bedieners (OPm), der die Vielzahl von unbemannten Luftfahrzeugen überwacht;
Erfassen von Fahrzeuginformationen, die durch ein unbemanntes Luftfahrzeug erfasst werden, das durch den Bediener aus der Vielzahl von unbemannten Luftfahrzeugen ausgewählt wird, die in der Liste angegeben werden;
Erfassen von Basisinformationen, die durch ein Instrument (Em) an einer Basis (Bm) erfasst werden, an der das ausgewählte unbemannte Luftfahrzeug starten und landen kann, wobei die Basisinformationen Bildinformationen sind, die durch eine Kamera des Instruments an der Basis aufgenommen werden; und
Anzeigen der erfassten Fahrzeuginformationen und der erfassten Basisinformationen auf dem Bildschirm des Endgeräts.

9. Informationsverarbeitungsprogramm, das konfiguriert ist, um en Computer zu veranlassen:
Anzeigen einer Liste, die eine Vielzahl von unbemannten Luftfahrzeugen (Dn) angibt, auf einem Bildschirm eines Endgeräts (Tm) eines Bedieners (OPm), der die Vielzahl von unbemannten Luftfahrzeugen überwacht;
Erfassen von Fahrzeuginformationen, die durch ein unbemanntes Luftfahrzeug erfasst werden, das durch den Bediener aus der Vielzahl von unbemannten Luftfahrzeugen ausgewählt wird, die in der Liste angegeben werden;
Erfassen von Basisinformationen, die durch ein Instrument an einer Basis erfasst werden, an der das ausgewählte unbemannte Luftfahrzeug starten und landen kann, wobei die Basisinformationen Bildinformationen sind, die durch eine Kamera des Instruments an der Basis aufgenommen werden; und
Anzeigen der erfassten Fahrzeuginformationen und der erfassten Basisinformationen auf dem Bildschirm des Endgeräts.

## Revendications

1. Dispositif de traitement d'informations (MS) comprenant :
une première unité de commande d'affichage (33c) configurée pour afficher une liste indiquant une pluralité de véhicules aériens sans pilote (Dn) sur un écran d'un terminal (Tm) d'un opérateur (OPm) qui surveille la pluralité de véhicules aériens sans pilote ;
une première unité d'acquisition (33e) configurée pour acquérir des informations de véhicule acquises par un véhicule aérien sans pilote sélectionné par l'opérateur parmi la pluralité de véhicules aériens sans pilote indiqués dans la liste ;
une seconde unité d'acquisition (33e) configurée pour acquérir des informations de base acquises par un instrument (Em) au niveau d'une base (Bm) où le véhicule aérien sans pilote sélectionné peut décoller et atterrir, dans lequel les informations de base sont des informations d'image capturées par une caméra de l'instrument au niveau de la base ; et
une seconde unité de commande d'affichage (33j) configurée pour afficher les informations de véhicule acquises par la première unité d'acquisition et les informations de base acquises par la seconde unité d'acquisition sur l'écran du terminal.

2. Dispositif de traitement d'informations selon la revendication 1, comprenant en outre une unité d'identification de base (33b) configurée pour identifier, pour chaque véhicule aérien sans pilote de la pluralité de véhicules aériens sans pilote, une base à laquelle le véhicule aérien sans pilote appartient, dans lequel la seconde unité d'acquisition est configurée pour acquérir les informations de base acquises par l'instrument au niveau de la base à laquelle le véhicule aérien sans pilote sélectionné par l'opérateur appartient parmi les bases identifiées par l'unité d'identification de base.

3. Dispositif de traitement d'informations selon la revendication 1 ou la revendication 2, dans lequel la seconde unité de commande d'affichage est configurée pour mettre en évidence une partie spécifique sur l'écran sur lequel les informations de véhicule et les informations de base sont affichées, la partie spécifique étant une partie sur l'écran que l'opérateur est invité à regarder.

4. Dispositif de traitement d'informations selon la revendication 3, comprenant en outre : une première unité d'identification (33f) configurée pour identifier un statut actuel ou une phase actuelle du véhicule aérien sans pilote sélectionné par l'opérateur ; et
une seconde unité d'identification (33h) configurée pour identifier la partie spécifique sur la base de l'état actuel ou de la phase actuelle du véhicule aérien sans pilote,
dans lequel la seconde unité de commande d'affichage est configurée pour mettre en évidence, sur l'écran, la partie spécifique identifiée par la seconde unité d'identification.

5. Dispositif de traitement d'informations selon la revendication 3, comprenant en outre :
une première unité d'identification (33f) configurée pour identifier un état actuel ou une phase actuelle du véhicule aérien sans pilote sélectionné par l'opérateur ; et
une unité de détermination (33i) configurée pour déterminer, sur la base de l'état actuel ou de la phase actuelle du véhicule aérien sans pilote, si un moment auquel l'opérateur doit regarder la partie spécifique est arrivé,
dans lequel la seconde unité de commande d'affichage est configurée pour mettre en évidence, sur l'écran, la partie spécifique dans un cas où il est déterminé que le moment auquel l'opérateur doit regarder la partie spécifique est arrivé ;
ou, selon la revendication 4, comprenant en outre :
une unité de détermination (33i) configurée pour déterminer, sur la base de l'état actuel ou de la phase actuelle du véhicule aérien sans pilote, si un moment auquel l'opérateur doit regarder la partie spécifique est arrivé,
dans lequel la seconde unité de commande d'affichage est configurée pour mettre en évidence, sur l'écran, la partie spécifique dans un cas où il est déterminé que le moment auquel l'opérateur doit regarder la partie spécifique est arrivé.

6. Dispositif de traitement d'informations selon la revendication 3,
comprenant en outre une unité de détection (33g) configurée pour détecter un changement d'un état actuel ou d'une phase actuelle du véhicule aérien sans pilote sélectionné par l'opérateur,
dans lequel la seconde unité de commande d'affichage est configurée pour modifier la mise en évidence de la partie spécifique sur l'écran en réponse à la détection du changement de l'état actuel ou de la phase actuelle du véhicule aérien sans pilote ; ou,
selon la revendication 4 ou 5, comprenant en outre :
une unité de détection (33g) configurée pour détecter un changement de l'état actuel ou de la phase actuelle du véhicule aérien sans pilote sélectionné par l'opérateur,
dans lequel la seconde unité de commande d'affichage est configurée pour modifier la mise en évidence de la partie spécifique sur l'écran en réponse à la détection du changement de l'état actuel ou de la phase actuelle du véhicule aérien sans pilote.

7. Dispositif de traitement d'informations selon la revendication 6, dans lequel les informations de véhicule comportent des premières informations d'image représentant une première image capturée par une première caméra dont est pourvu le véhicule aérien sans pilote sélectionné par l'opérateur,
dans lequel les informations d'image représentent une seconde image capturée par la caméra de l'instrument au niveau de la base,
la partie spécifique est la première image ou la seconde image, et
la seconde unité de commande d'affichage est configurée pour passer de la mise en évidence de la première image à la seconde image ou de la mise en évidence de la seconde image à la première image sur l'écran en réponse à la détection du changement de l'état actuel ou de la phase actuelle du véhicule aérien sans pilote et en synchronisation avec celle-ci.

8. Procédé d'affichage d'informations exécuté par un ou plusieurs ordinateurs comprenant :
l'affichage d'une liste indiquant une pluralité de véhicules aériens sans pilote (Dn) sur un écran d'un terminal (Tm) d'un opérateur (OPm) qui surveille la pluralité de véhicules aériens sans pilote ;
l'acquisition d'informations de véhicule acquises par un véhicule aérien sans pilote sélectionné par l'opérateur parmi la pluralité de véhicules aériens sans pilote indiqués dans la liste ;
l'acquisition des informations de base acquises par un instrument (Em) au niveau d'une base (Bm) où le véhicule aérien sans pilote sélectionné peut décoller et atterrir, dans lequel les informations de base sont des informations d'image capturées par une caméra de l'instrument au niveau de la base ; et
l'affichage des informations de véhicule acquises et des informations de base acquises sur l'écran du terminal.

9. Programme de traitement d'informations configuré pour amener un ordinateur à :
afficher une liste indiquant une pluralité de véhicules aériens sans pilote (Dn) sur un écran d'un terminal (Tm) d'un opérateur (OPm) qui surveille la pluralité de véhicules aériens sans pilote ;
acquérir des informations de véhicule acquises par un véhicule aérien sans pilote sélectionné par l'opérateur parmi la pluralité de véhicules aériens sans pilote indiqués dans la liste ;
acquérir des informations de base acquises par un instrument au niveau d'une base où le véhicule aérien sans pilote sélectionné peut décoller et atterrir, dans lequel les informations de base sont des informations d'image capturées par une caméra de l'instrument au niveau de la base ; et
afficher les informations de véhicule acquises et les informations de base acquises sur l'écran du terminal.
